# EUROPEAN PATENT APPLICATION

(11) **EP 2 363 742 A1**
(43) Date of publication of application: **07.09.2011**
(21) Application number: 11156552.9
(22) Date of filing: 02.03.2011
(51) Int. Cl.: G02B 26/08, G02B 26/12

(54) **Scanning System with Orbiting Objective**

(30) Priority: 03.03.2010 US 717025
(71) Applicant: Palo Alto Research Center Incorporated, Palo Alto, California 94304 (US)
(72) Inventor: Curry, Douglas N, San Mateo, CA 94402 (US)
(74) Representative: Skone James, Robert Edmund

(57) **Abstract**

A scanning system (100) including a conveyor unit (110) and a revolver unit (150) that respectively rotate around first and second parallel axes and cooperatively interact to continuously transfer collimated light along a light path between a fixed device (50) (e.g., laser or image sensor) and an orbiting element (e.g., microscope objective or projection optics). The conveyor unit (110) including first and second surfaces (130,140) disposed to rotate in a fixed parallel relationship around the first axis such that collimated light is directed by the surfaces from a fixed light path portion to a parallel scanning light path portion that orbits the fixed path at a constant offset distance. The revolver unit (150) including an orbiting element rotated around the second axis, which is collinear with the fixed light path portion, and the element orbits at a radius equal to the offset distance between the fixed and scanning light path portions.

## Description

### FIELD OF THE INVENTION

This invention relates to scanning systems, and more particularly to light scanning systems that transmit collimated light between a fixed source/receiver and an orbiting (rotating) element, such as a microscope objective.

### BACKGROUND OF THE INVENTION

There are several technical fields having a need for an apparatus capable of scanning large areas with high resolution and high efficiency. One such technical field involves the identification of a relatively low number of rare cells in blood or other body fluids using a fluorescent material that selectively attaches to the rare cells, and then a smear treated in this manner is optically analyzed to identify rare cells of the targeted type by the presence of the fluorescent material in the smear. For statistical accuracy it is important to obtain as large a number of cells as required for a particular process, in some studies at least ten rare cells should be identified, requiring a sampling of at least ten million cells, for a one-in-one-million rare cell concentration.

Another technical field requiring an apparatus capable of scanning large areas with high resolution and high efficiency is in the solar industry, where there is need to quickly ablate solar cells to make vias to interconnect to an external circuit. In production, solar cells may have a nitride layer insulating and protecting the top junction. If there were a way to quickly and efficiently produce these vias through laser ablation in a laser scanner, a high throughput production of solar cells could be achieved. For some laser ablation applications, a femto-second laser may be required. For a femto-second laser to work properly, chromatic and other types of aberrations can adversely affect the pulse quality. These aberrations occur because the scanning lenses curve and distort the beam during scanning to produce linear movement, flat field and constant scanning velocity. This invention solves this problem by eliminating the intermediate scan lenses to provide a simple and lens free intermediate light-path during the scanning process.

Currently, the various technical fields requiring high resolution, high efficiency scanning apparatus either employ a microscope, which is capable of providing high resolution, or a scanning apparatus, which provides high efficiency. With respect to high resolution, microscopes have an advantage over conventional scanning systems in that the microscope's objective lens can be completely filled by collimated light to produce a tightly focused beam with a high numerical aperture (NA). The resulting steep cone angle inside the microscope objective is what makes high resolution possible. On the other hand, conventional scanning systems, such as those used for laser ablation (discussed above), inherently suffer degraded resolution because the scanning beam must have a smaller diameter than the field lens to avoid truncation as it scans across the lens, and therefore necessarily presents a shallower cone angle onto the object plane.

An obvious approach to achieving high resolution and high efficiency would be to repeatedly move a microscope objective over a sample in a selected raster (scanning) pattern. Utilizing a rectilinear format raster pattern (i.e., moving the objective back and forth over a sample) could provide a workable solution, but due to the significant mass of the microscope objective, moving the objective in a oscillating format raster pattern (i.e., back and forth) over a sample is problematic because the resulting momentum would limit the raster speed. On the other hand, the objective could revolve about a central axis passing over the sample once every revolution. A processor could remap the sector-shaped rasters into linear format rasters enabling a large area and high resolution, but the light gathering efficiency would be low because samples only occupy a small fraction of the scanned circumference. To increase the light gathering efficiency, several sample stations could be placed around the revolved circumference to increase the time spent gathering light. But for the majority of applications where there is only one sample to scan, this approach yields only the lowest efficiency, perhaps 10%. A better way to increase the light gathering efficiency would be to scan one sample station with multiple objectives. This approach would also yield high efficiency, but there is a problem with coupling the collimated light down the axis of each orbiting objective during scanning that has heretofore prohibited this method. That is, in designing a single-axis rotating objective system that has more than one objective there has always been a problem of the laser beam "walking" along the facet during each scan. In particular, the reflected light could not be made parallel to the optical axis without lenses which would cause optical aberrations.

What is needed is a scanning system that can be used to produce large area, high resolution, high efficiency apparatus such as, for example, a high speed scanning microscope or a laser ablation device. More particularly, what is needed is a scanning system that is capable of transferring collimated light to or from a fixed device (e.g., a source such as a laser or a receiver such as an image sensor) in a manner that allows the collimated light to be reliably and accurately multiplexed down the axis of one or more orbiting elements (e.g., microscope objectives) without using lenses that cause optical aberration, thereby facilitating, for example, a large field, high resolution, high efficiency rotary microscope or laser ablation device.

### SUMMARY OF THE INVENTION

The present invention is generally directed to a low cost scanning system in which two rotating units cooperatively interact to continuously transfer collimated light along a light path between a fixed device (e.g., a source such as a laser or a receiver such as an image sensor) and one or more orbiting elements (e.g., filters, lenses, or microscope objectives), thereby eliminating the intermediate scan lenses to provide a simple and unchanging light path during the scanning process. The scanning system is utilized, for example, in a scanning microscope by positioning the orbiting microscope objectives over a flat surface at a constant height and capturing the scanned image using an image sensor as the fixed device. Alternatively, the scanning system is utilized as a laser ablation device in which the scanning system is used to direct laser pulses from a fixed laser to an orbiting lens disposed to pass over a solar cell at a constant height.

The first rotating unit of the scanning system (referred to herein as a conveyor unit) utilizes one or more pairs of flat-plate surfaces that are spaced apart by a predetermined distance and inclined at an angle (e.g., 45°) relative to the first axis, and orbit the first axis in a fixed parallel relationship. With this arrangement, collimated light directed parallel to the first axis along a fixed portion of the light path onto the first surface is redirected (i.e., reflected or refracted) by way of the second surface onto a scanning portion of the light path, where the scanning light path portion is parallel to the fixed portion and pivots around the fixed path at a fixed offset distance. According to an aspect of the present invention, the resulting arrangement is low cost because the optical surfaces of the conveyor unit are implemented using flat plate optics, thereby avoiding the high production expenses typically associated with curved optical surfaces. Moreover, because flat plate optics are used, the scanning system of the present invention facilitates transferring collimated light between a stationary device disposed in the fixed light path portion and a moving element (e.g., a microscope objective) disposed in the scanning path portion without the aberration or distortion produced by curved optical surfaces.

The second rotating unit of the scanning system (referred to herein as a revolver unit) includes at least one orbiting element (e.g., a microscope objective) rotated around a second axis. According to another aspect of the invention, the revolver unit is positioned relative to the conveyor unit such that the first and second axes maintain a fixed parallel and non-collinear orientation, the second axis is arranged to be collinear with the fixed light path portion, and the orbiting element is maintained at a fixed radial distance from the second axis that is equal to the fixed offset distance separating the fixed and scanning light path portions. With this arrangement, the orbiting element is easily positioned to receive collimated light transmitted from the fixed light path portion to the scanning light path portion by the conveyor unit simply by rotating the orbiting element around the second axis (i.e., with the conveyor unit in a stationary state) until the scanning light path portion intersects (e.g., passes through) the orbiting element.

According to another aspect of the invention, the conveyor unit and the revolver unit are rotated at a common rotational speed (e.g., 100 rotations per minute) such that, while the collimated light is directed along the fixed light path portion onto the first surface, the collimated light redirected by the second surface onto the scanning light path portion remains intersected with said element. That is, because the orbiting element travels along the same circular path traced by the scanning light path portion, by rotating the conveyor unit around the first axis at the same rotational speed as the revolver unit is rotated around the second axis, the collimated light directed along the scanning light path portion remains intersected with the orbiting element. In this way, the present invention provides a scanning system that is capable of transferring collimated light to or from a fixed device (e.g., a source such as a laser or a receiver such as an image sensor) in a manner that allows the collimated light to be directed along the optical axis of one or more orbiting elements.

According to an embodiment of the invention, the orbiting element is implemented by a microscope objective disposed between the scanning light path portion and a predetermined sample, whereby the collimated light directed along the light path is focused by the microscope objective onto the sample. By utilizing a microscope objective as the orbiting element in the above-scanning system, the present invention facilitates the production of large area, high resolution, high efficiency apparatus such as, for example, a high speed scanning microscope or a laser ablation device. That is, because the microscope objective is rotated around a fixed axis at a constant speed, and because collimated light transferred from the fixed light path portion to the scanning portion remains aligned with the optical axis of the microscope objective as it orbits around the second axis, the present invention successfully combines the high resolution of a microscope objective with the high efficiency of a scanning system. This arrangement enables the extension of microscopy into large area with high efficiency and high resolution, and with all the microscope functions still intact.

According to alternative embodiments of the present invention, the collimated light is redirected by the conveyor unit using either refracted or reflected light. Refracted light is achieved, for example, using a solid optical (e.g., clear glass) element having the parallel refracting surfaces formed on opposite sides of the element, where a benefit of this arrangement is that the surfaces are automatically aligned by the solid optical element, thereby reducing assembly and maintenance costs. Reflected light is achieved using parallel mirrors that face each other and are disposed at a 45° angle with respect to the fixed light path. In one specific embodiment, the parallel mirrors are maintained in the proper orientation by a support structure having an opening to allow passage of collimated light. In an alternative embodiment, the parallel mirrors are formed on opposite sides of a solid optical element (i.e., such that the mirrors face into the element), thereby providing the self-alignment benefits mentioned above.

According to another specific embodiment of the invention, a multiplexed scanning system is produced by proving the conveyor unit including a multifaceted optical element including multiple outward-facing first mirror (reflecting) surfaces, and a ring structure concentrically integrally connected to the optical element and including multiple inward-facing second mirror surfaces that are disposed around the multifaceted optical element and positioned such that each of the first mirror surfaces reflects light from the fixed light path portion to an associated second mirror surface when the first mirror surface is positioned to intersect the fixed light path portion. That is, the multifaceted optical element and the ring structure are disposed to rotate around the first axis in a fixed relationship. The multiplexed scanning system also includes revolver unit including multiple orbiting elements disposed in a circular pattern around a second axis, where the number of orbiting elements is the same as the number of first mirror/second mirror pairs and arranged such that, as each first mirror surface rotates into a position that intersects the fixed light beam portion, light is reflected between the fixed light beam portion and a corresponding one of the orbiting elements by way of an associated second mirror surface. In a manner similar to that described above, simultaneous rotation of the conveyor and revolver units at the same speed causes light reflected by each first mirror surface to remain on-axis with its corresponding orbiting element as both units rotate through a predetermined range of rotation, thereby causing light acted upon (e.g., focused) by the corresponding orbiting element to trace across the surface of a sample along a curved path. By periodically moving the sample relative to the scanning apparatus (e.g., using an X-Y table), the multiplexed scanning system facilitates the production of a large field, high resolution, high efficiency rotary microscope or laser ablation device.

According to an embodiment of the present invention, a large field, high resolution, high efficiency rotary microscope or scanning device is produced utilizing any of the scanning apparatus described herein by providing a light source/receiver (e.g., a laser or an images sensor) in the fixed light path portion and providing a sample positioning mechanism (e.g., an X-Y table) below the revolver unit such that light passing through one or more orbiting elements is scanned across a sample in a systematic pattern.

### BRIEF DESCRIPTION OF THE DRAWINGS

These and other features, aspects and advantages of the present invention will become better understood with regard to the following description, appended claims, and accompanying drawings, where:

Fig. 1 is a side perspective view showing a simplified scanning system according to an exemplary embodiment of the present invention;

Figs. 2(A), 2(B), 2(C), 2(D) and 2(E) are simplified side elevation views showing exemplary scanning system of Fig. 1 during operation;

Figs. 3(A), 3(B), 3(C), 3(D) and 3(E) are simplified top plan views showing exemplary scanning system of Fig. 1 during operation;

Fig. 4 is a simplified perspective view showing a scanning system according to an alternative embodiment of the present invention;

Fig. 5 is a simplified perspective view showing a scanning system according to another alternative embodiment of the present invention;

Figs. 6(A) and 6(B) are perspective top side views showing a conveyor unit and a revolver unit, respectively, according to another alternative embodiment of the present invention;

Fig. 7 is a top plan view showing an assembled scanning system including the conveyor unit and a revolver unit of Figs. 6(A) and 6(B) ;

Fig. 8 is a side elevation view showing an exemplary large area, high resolution, high efficiency apparatus including the scanning system of Fig. 7 according to another embodiment of the present invention;

Fig. 8(A) is a simplified diagram depicting alternative dichroic or beam splitting devices disposed in the light path of the scanning system of Fig. 7;

Figs. 9(A), 9(B), 9(C), 9(D) and 9(E) are partial top views showing the scanning system of Fig. 7 during operation; and

Figs. 10(A), 10(B), 10(C), 10(D) and 10(E) are partial top views illustrating scan patterns traced by a focused light path portion generated by the scanning system of Fig. 7 during operation.

### DESCRIPTION OF THE DRAWINGS

The present invention relates to an improvement in scanning systems that can be utilized to produce, for example, a large field, high resolution, high efficiency rotary microscope. The following description is presented to enable one of ordinary skill in the art to make and use the invention as provided in the context of a particular application and its requirements. As used herein, directional terms such as "above" and "below" are intended to provide relative positions for purposes of description, and are not intended to designate an absolute frame of reference. In addition, the phrases "integrally connected" and "integrally molded" is used herein to describe the connective relationship between two portions of a single molded or machined structure, and are distinguished from the terms "connected" or "coupled" (without the modifier "integrally"), which indicates two separate structures that are joined by way of, for example, adhesive, fastener, clip, or movable joint. Various modifications to the preferred embodiment will be apparent to those with skill in the art, and the general principles defined herein may be applied to other embodiments. Therefore, the present invention is not intended to be limited to the particular embodiments shown and described, but is to be accorded the widest scope consistent with the principles and novel features herein disclosed.

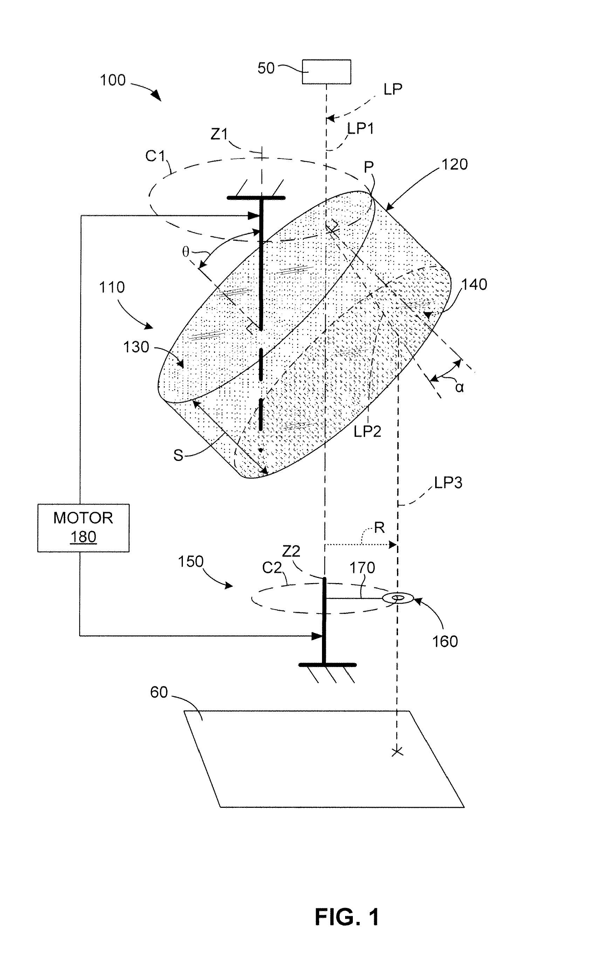

Fig. 1 is a simplified perspective view showing a scanning system 100 according to a first simplified exemplary embodiment of the present invention. When utilized in an operable setting, scanning system 100 serves to transmit collimated light traveling along a light path LP (indicated by dashed line) that includes a fixed light path portion LP1, an intermediate light path portion LP2, and a scanning light path portion LP3, where scanning portion LP3 is parallel to fixed portion LP1 and is spaced from fixed portion LP1 by an offset distance R. In addition to scanning system 100, Fig. 1 depicts a generalized stationary device 50 disposed in fixed light path portion LP1, and a sample (target) 60 disposed below scanning system 100 to intercept at least a portion of scanning light path portion LP3. Device 50 and sample 60 are provided for descriptive purposes, and are not intended to be part of the claimed scanning system unless otherwise specified in the appended claims.

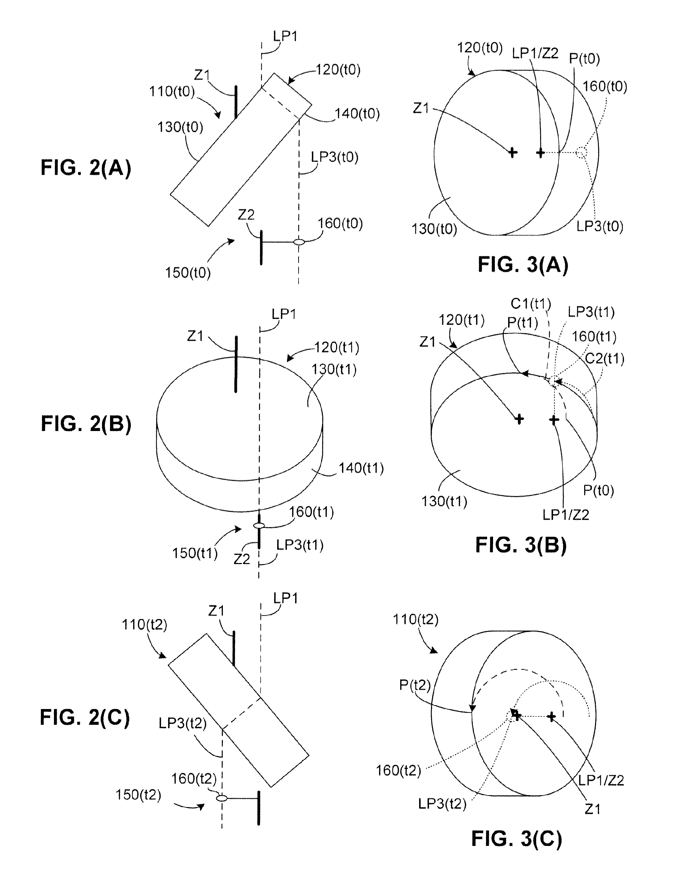

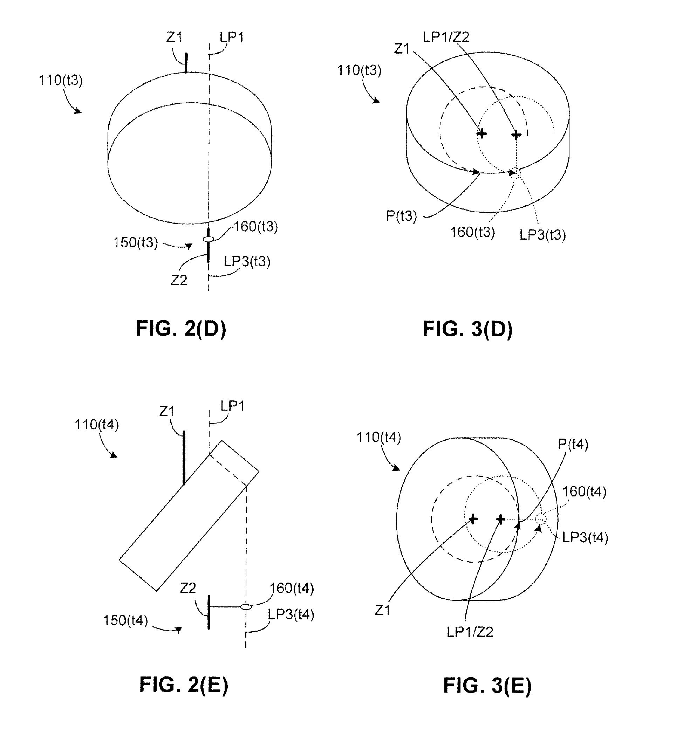

Referring to the upper portion of Fig. 1, scanning system 100 includes a conveyor unit 110 disposed to rotate around a fixed (stationary) first axis Z1. Conveyor unit 110 generally includes a first flat (planar) surface 130 and a second flat surface 140 that are fixedly maintained in a parallel relationship and spaced apart by a predetermined distance S. First surface 130 and second surface 140 disposed at an inclination angle θ (e.g., 45°) relative to axis Z1, and are rotatably engaged to a fixed axle or other fixed structure such that first surface 130 and second surface 140 collectively rotate around first axis Z1. As discussed below with reference to Figs. 2 and 3, first surface 130 and second surface 140 are disposed to rotate around axis Z1 such that inclination angle θ is maintained between axis Z1 and first surface 130 and second surface 140 (i.e., such that a selected point P on first surface 130 traces a circular path C1 around axis Z1, as shown in Fig. 1). With this arrangement, for example, collimated light emitted from device 50 that is directed parallel to first axis Z1 along fixed light path portion LP1 is refracted (redirected) from first surface 130, and then again refracted by second surface 140 onto scanning light path portion LP3 of the light path, where scanning light path portion LP3 is parallel to fixed portion LP1 and is displaced by fixed offset distance R. According to an aspect of the present invention, the resulting arrangement is low cost because the optical surfaces (i.e., first surface 130 and second surface 140) of conveyor unit 110 are implemented using flat plate optics, thereby avoiding the high production expenses and inferior quality (i.e., aberration or distortion) associated with curved optical surfaces. Moreover, because flat-plate surfaces 130 and 140 are used to redirect light from fixed light path portion LP1 to scanning light path portion LP3, scanning system 100 facilitates transferring collimated light between stationary device 50 and a moving element, as described further below, without the aberration or distortion produced by curved optical surfaces.

According to an embodiment of the present invention, first surface 130 and second surface 140 are formed on opposite sides of a solid optical element 120 comprising, e.g., a low iron glass or clear plastic produced as an integrally molded or otherwise integrally connected structure. Utilizing optical element 120 in this manner provides several benefits. First, because optical element 120 is solid, first surface 130 and second surface 140 remain permanently aligned relative to each other in the desired fixed parallel relationship, thus maintaining optimal optical operation while minimizing assembly and maintenance costs. Moreover, the loss of light at the gas/solid interfaces is minimized because only solid optical element material (e.g., low-iron glass) is positioned between first surface 130 and second surface 140. In alternative embodiments, one or more solid optical elements may be assembled to provide first surface 130 and second surface 140, but such a multiple part arrangement might require additional assembly and regular maintenance to assure optimal performance.

Those skilled in the art will recognize that a collimated light beam transmitted onto surface 130 in a direction that is parallel to axis Z1 (e.g., along fixed light path portion LP1) will be refracted inside optical element 120 toward second surface 140 (i.e., along intermediate light path portion LP2) at refraction angle α determined by the index of refraction of optical element 120, the index of refraction of the medium outside the optical element (air), and the inclination angle θ, and then refracted again by second surface 140 and emerge from optical element 120 as collimated light traveling in a direction that is parallel to but offset from the input direction by offset distance R (i.e., along scanning light path portion LP3), where offset distance R is determined by the refraction angle α and the spacing distance S between first surface 130 and second surface 140.

Referring to the lower portion of Fig. 1, scanning system 100 also includes a revolver unit 150 having an orbiting element 160 (e.g., a filter, lens, additional reflective or refractive surfaces, or microscope objective) that is disposed to rotate around a second axis Z2 According to an aspect of the invention, second axis Z2 is parallel to and spaced from (i.e, non-collinear) with first axis Z1, and in particular is aligned coaxially with fixed light path portion LP1. In addition, the orbiting element 160 is maintained at a fixed radial distance from second axis Z2 that is equal to fixed offset distance R (i.e., the distance between fixed light path portion LP1 and scanning light path portion LP3). According to another aspect of the invention, conveyor unit 110 is rotationally positioned relative to first axis Z1 and revolver unit 150 is rotationally positioned relative to second axis Z2 such that, when collimated light is transmitted along fixed light path portion LP1 onto first surface 130, orbiting element 160 receives collimated light transmitted on scanning light path portion LP3 (i.e., orbiting element 160 is arranged to intersect scanning light path portion LP3). With the arrangement described above, positioning orbiting element 160 in this way is easily achieved by rotating orbiting element 160 around second axis Z2 (i.e., while maintaining conveyor unit 110 in a stationary position relative to axis Z1) until scanning light path portion LP3 intersects (e.g., passes through) orbiting element 160, as shown in Fig. 1.

According to another aspect of the invention, a mechanism (e.g., motor 180) is operably connected to conveyor unit 110 and revolver unit 150 using known techniques in order to rotate conveyor unit 110 and revolver unit 150 at a common rotational speed (e.g., conveyor unit 110 and revolver unit 150 are locked in synchronous rotation such that both conveyor unit 110 and revolver unit 150 rotate at 100 rotations per minute). By rotating conveyor unit 110 and revolver unit 150 at a common rotational speed after aligning orbiting element 160 with scanning light path portion LP3, the light transmitted on scanning light path portion LP3 continuously remains on-axis (e.g., passes through) orbiting element 160. That is, because orbiting element 160 orbits second axis Z2 (i.e., travels along a circular path C2 shown in Fig. 1) at offset distance R, and because the collimated light transmitted on scanning light path portion LP3 traces an identical path around fixed light path portion Ll at radius R from the same axis, by rotating the conveyor unit 110 around first axis Z1 at the same rotational speed as revolver unit 150 is rotated around the second axis, the collimated light directed along scanning light path portion LP3 remains on-axis (intersected) with orbiting element 160. In this way, the present invention provides a scanning system that is capable of transferring collimated light to or from a fixed device 50 (e.g., a source such as a laser or a receiver such as an image sensor) in a manner that allows the collimated light to be directed along the optical axis of one or more orbiting elements 160.

Figs. 2(A) to 2(E) and 3(A) to 3(E) are simplified representations showing how scanning light path portion LP3 remains on-axis (intersected) with orbiting element 160 when first surface 130 and second surface 140 are rotated around first axis Z1 at the same (common) rotational speed that orbiting element 160 is rotated around second axis Z2. Figs. 2(A) to 2(E) are simplified representations showing scanning system 100 from a side view in various rotational positions, and Figs. 3(A) to 3(E) are simplified representations showing scanning system 100 from a top view in the same rotational positions. The parenthetical suffixes "tx" (where "x" is a number) are used to indicate incremental time progressions as first surface 130 and second surface 140 are rotated around first axis Z1 and orbiting element 160 is rotated around second axis Z2. For example, the reference "120(t0)" in Fig. 2(A) indicates optical element 120 (see Fig. 1) in a first position at an initial time to, and the reference "120(t1)" in Fig. 2(B) indicates optical element 120 in a second position at a time t1 subsequent to time t0.

Figs. 2(A) and 3(A) show conveyor unit 110(t0) and revolver unit 150(t0) in an initial position. Collimated light is depicted by the dashed line passing through optical element 120(t0) , with fixed light path portion LP1 intersecting first surface 130(t0) and scanning light path portion LP3(t0) intersecting second surface 140(t0). As indicated in top view in Fig. 3 (A), conveyor unit 110(t0) is rotationally positioned relative to first axis Z1 such that point P(t0) is located at a three-o'clock position. In addition, revolver unit 150(t0) is positioned such that second axis Z2 is collinear with fixed light path portion LP1, and orbiting element 160(t0) is initially rotationally positioned such that scanning light path portion LP3(t0) intersects orbiting element 160(t0).

Figs. 2(B) and 3(B) show conveyor unit 110(t1) and revolver unit 150(t1) at a time t1 after both units have rotated a quarter turn in the counterclockwise direction. Note that fixed light path portion LP1, first axis Z1 and second axis Z2 remain in the same position as that depicted in Fig. 2(A) and 2(B), and are therefore do not include time suffixes. As indicated in top view in Fig. 3(B), conveyor unit 110(t1) is rotationally positioned relative to first axis Z1 such that point P(t1) is located at a twelve-o'clock position relative to first axis Z1 (i.e., point P has traveled a portion C1(t1) along a circular path around first axis Z1). As a consequence, first surface 130(t1) and second surface 140(t1) refract light from fixed light path portion LP1 to scanning light path portion LP3(t1), which is located at a twelve-o'clock position with reference to axis Z2 (i.e., scanning portion LP3 has traveled a portion C2(tl) along a circular path around second axis Z2). At the same time, because orbiting element 160(t1) is disposed to rotate around axis Z2 at the same offset distance as that of scanning portion LP3, orbiting element 160(t1) is rotationally positioned at the same twelve-o'clock position with reference to axis Z2 such that scanning portion LP3(t1) intersects orbiting element 160(t1).

Figs. 2(C) to 2(E) and 3(C) to 3(E) sequentially show subsequent rotational positions as the units continue to rotate around axes Z1 and Z2. Figs. 2(C) and 3(C) show conveyor unit 110(t2) and revolver unit 150(t2) and at a time t2 after both units have rotated a half turn in the counterclockwise direction, where Fig. 3(C) shows the progression of point P(t2) to a nine-o'clock position relative to first axis Z1, and orbiting element 160(t2) and scanning portion LP3(t2) positioned at the same nine-o'clock position with reference to axis Z2 such that scanning portion LP3(t2) intersects orbiting element 160(t2). Figs. 2(D) and 3(D) show conveyor unit 110(t3) and revolver unit 150(t3) and at a time t3 after both units have rotated three-quarters of a turn in the counterclockwise direction, where Fig. 3(D) shows the progression of point P(t3) to a six-o'clock position relative to first axis Z1, and orbiting element 160(t3) and scanning portion LP3(t3) are positioned at the same six-o'clock position with reference to axis Z2. Finally, Figs. 2(E) and 3(E) show conveyor unit 110(t4) and revolver unit 150(t4) and at a time t4 after both units have rotated a fully 360° turn in the counterclockwise direction, where Fig. 3(E) shows point P(t4) in its original position, and orbiting element 160(t4) and scanning portion LP3(t4) coincidentally positioned at the same three-o'clock position with reference to axis Z2.

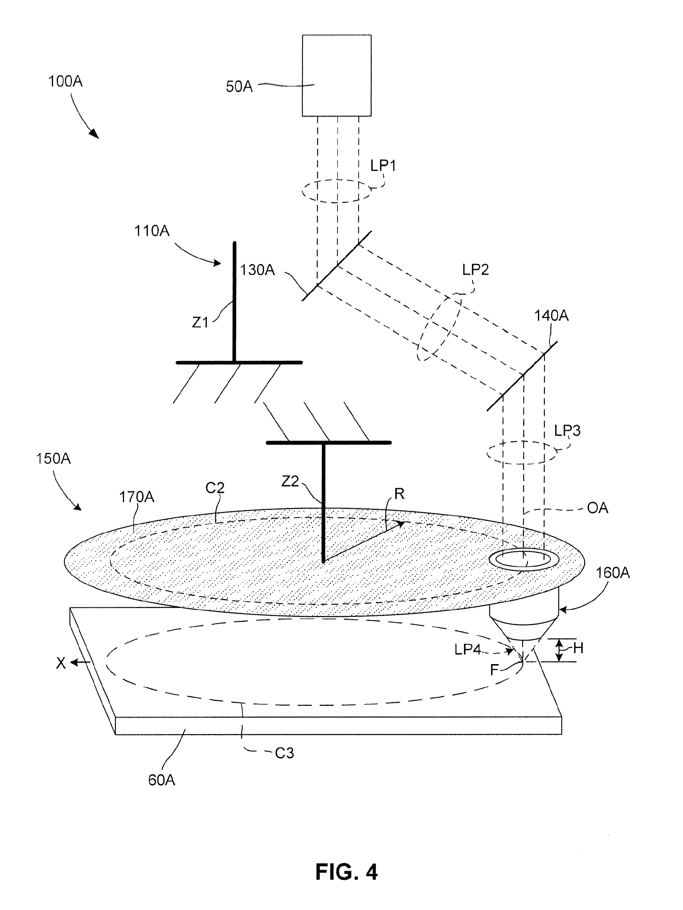

Fig. 4 is a simplified perspective view showing a scanning system 100A according to an alternative embodiment of the present invention. Similar to generalized scanning system 100 (discussed above with reference to Figs. 1-3), scanning system 100A includes a conveyor unit 110A including first surface 130A and second surface 140A that are disposed to rotated around first axis Z1, and a revolver unit 150A disposed to rotate around second axis Z2, where second axis Z2 is collinear with fixed light path portion LP1. As mentioned above and indicated by parallel lines extending from source/receiver 50A, the flat-plate optical system produced by first surface 130A and second surface 140A facilitate the transmission of collimated light between fixed light path portion LP1 and scanning light path portion LP3 (i.e., the light remains collimated along each portion LP1, LP2 and LP3 of the light path light path extending between source/receiver 50A and revolver unit 150A).

According to the present embodiment, scanning system 100A differs from generalized scanning system 100 in that the orbiting element of revolver unit 150A comprises a microscope objective lens (microscope objective) 160A, such as a 40x objective, mounted on a suitable rotating structure (e.g., a plate 170A) such that an optical axis OA of microscope objective 160A is disposed collinear with scanning light path portion LP3, and such that microscope objective 160A focuses the collimated light of scanning portion LP3 in a focused region LP4 that traces a circular scan path C3 over the surface of sample 60A. That is, similar to previous embodiments, microscope objective 160A is disposed at radial distance R from second axis Z2 that is equal to the lateral offset distance between fixed light path portion LP1 and scanning light path portion LP3, microscope objective 160A is rotated around second axis Z2 while first surface 130A and second surface 140A are rotated around first axis Z1 at the same rotational speed, and microscope objective 160A is aligned such that scanning light path portion LP3 is collinear with optical axis OA of microscope objective 160A during at least a portion of the circular path C2 traveled by microscope objective 160A around second axis Z2. This arrangement enables the extension of microscopy into large area with high efficiency and high resolution, and with all the microscope functions still intact. That is, because the transfer of light between the fixed and scanning light paths portions is entirely accomplished with flat-plate optics (i.e., there are no lenses or curved surfaces that would introduce chromatic or dispersive aberrations in the pristine microscope light path), light collimation, polarization, phase, spectral content, axial performance and virtually all objectives made for standard microscopes remain unaffected by the scanning system of the present invention, so all of the imaging methods that are available to standard microscopes are also available for exploitation in a rotary microscope utilizing the scanning system of the present invention. In particular, the present invention facilitates the production of large field microscopes that permit any number of fluorescence channels, support all microscope resolutions that do not involve oil emersion including confocal resolutions, exhibit low noise void of autofluorescence problems, allow all types of microscope illumination techniques such as Kohler, Darkfield, Rheinberg, Phase Contrast, Polarized, DIC, and Spectral, and finally, facilitate large scan-fields with light capture efficiencies so high that the image capture rate may be limited only by the capacity and throughput of the electronic subsystems. Moreover, scanning system 100A can be utilized to produce a laser ablation device that addresses the problems associated with conventional laser ablation devices by eliminating the intermediate scan lenses needed in conventional systems, thereby providing a simple and unchanging light-path between the laser and the target substrate during the scanning process.

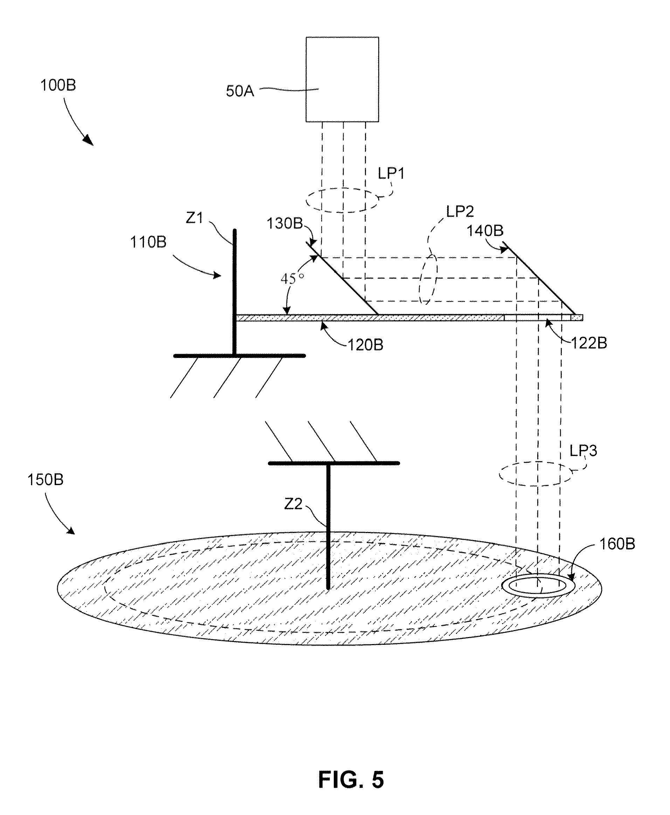

Fig. 5 is a simplified perspective view showing a scanning system 100B according to an alternative embodiment of the present invention. Similar to generalized scanning system 100A (discussed above with reference to Fig. 4), scanning system 100B includes a conveyor unit 110B including first surface 130B and second surface 140B that are disposed to rotated around first axis Z1, and revolver unit 150B (discussed above with reference to Fig. 4) including an orbiting element 160B disposed to rotate around second axis Z2, where second _{Z2} is collinear with fixed light path portion LP1.

According to the present embodiment, scanning system 100B differs from the previously described scanning systems in that first surface 130B and second surface 140B are reflecting (i.e., mirror) surfaces instead of refracting surfaces. In particular, both first mirror surface 130B and second mirror surface 140B are arranged in parallel 45° angles with respect to axis Z1, and are supported in fixed parallel relationship by a support structure 120B, where support structure 120B defines an opening 122B to allow the passage of collimated light reflected by second mirror surface 140B from intermediate light path portion LP2 to scanning light path portion LP3. Similar to the refracted light embodiments mentioned above, the flat-plate optical system produced by first mirror surface 130B and second mirror surface 140B facilitate the transmission of collimated light between fixed light path portion LP1 and scanning light path portion LP3 (as indicated by the parallel lines along the light path).

Although scanning system 100B utilizes support structure 120B to maintain first mirror surface 130B and second mirror surface 140B, other arrangements are also possible. For example, parallel mirror surfaces 130B and 140B may be formed on opposite sides of a solid optical element (e.g., a prism) similar to that described above with reference to Fig. 1 (i.e., such that mirror surfaces 130B and 140B face into the element), thereby providing the self-alignment benefits mentioned above.

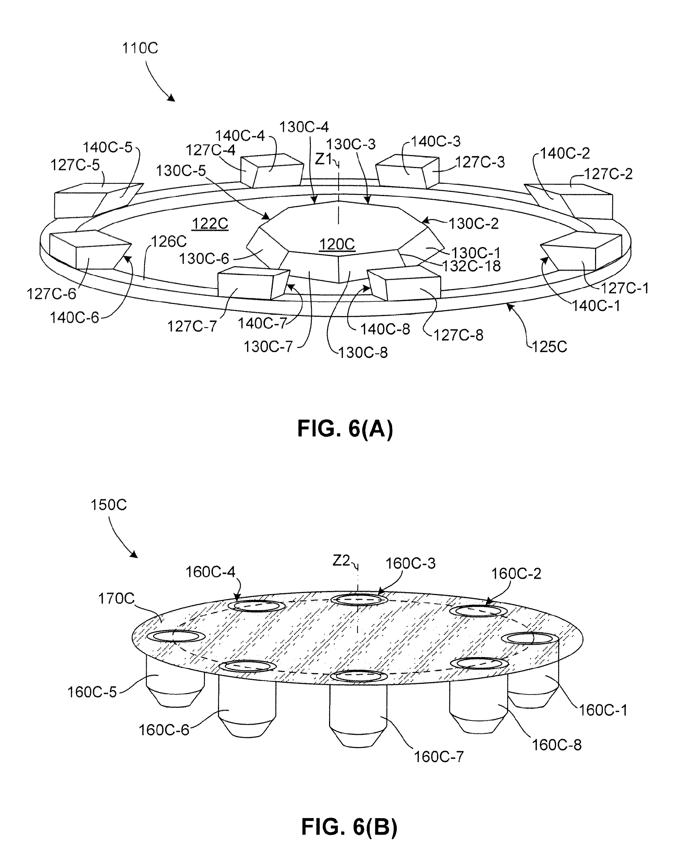

Figs. 6(A) and 6(B) are perspective views respectively showing a conveyor unit 110C and a revolver unit 150C according to another embodiment of the present invention.

Referring to Fig. 6(A), conveyor unit 110C includes a multifaceted optical element 120C and a ring structure 125C. Multifaceted optical element 120C includes a predetermined number (eight in this embodiment) of first mirror (reflecting) surfaces 130C-1 to 130C-8 that are disposed in a contiguous manner around first axis Z1, with each adjacent pair of first mirror surfaces (e.g., 130C-1 and 130C-8) being separated by an angled corner (e.g., corner 132C-18). Ring structure 125C includes the same predetermined number (i.e., eight in the present embodiment) of second mirror (reflecting) surfaces 140C-1 to 140C-8 respectively disposed on blocks 127C-1 to 127C-8 that are arranged on a ring-shaped base structure 126C and disposed around multifaceted optical element 120C. Multifaceted optical element 120C and ring structure 125C are integrally connected, e.g., by spokes (not shown) or other linking mechanism such that an open space 122C is defined between multifaceted optical element 120C and ring structure 125C, and such that multifaceted optical element 120C and ring structure 125C are disposed to rotate around first axis Z1 in a fixed relationship. In particular, multifaceted optical element 120C and ring structure 125C are positioned such that each first mirror surface 130C-1 and 130C-8 is arranged parallel to and facing an associated second mirror surface 140C-1 to 140C-8 (e.g., first mirror surface 130C-1 is parallel to and face associated second mirror surface 140C-1, and first mirror surface 130C-2 is parallel to and face associated second mirror surface 140C-2). Further, because of the integral connection between multifaceted optical element 120C and ring structure 125C, associated mirror pairs (e.g., first mirror surface 130C-1 and associated second mirror surface 140C-1) remain in this fixed parallel arrangement when multifaceted optical element 120C and ring structure 125C are collectively rotated around axis Z1.

Referring to Fig. 6(B), revolver unit 150C includes the same predetermined number (i.e., eight in the present embodiment) of orbiting microscope objectives (elements) 160C-1 to 160C-8 disposed in a fixed relationship on a circular support plate 170C and in a circular pattern around a second axis Z2, each microscope objective 160C-1 to 160C-8 having an associated optical axis aligned parallel to second axis Z2.

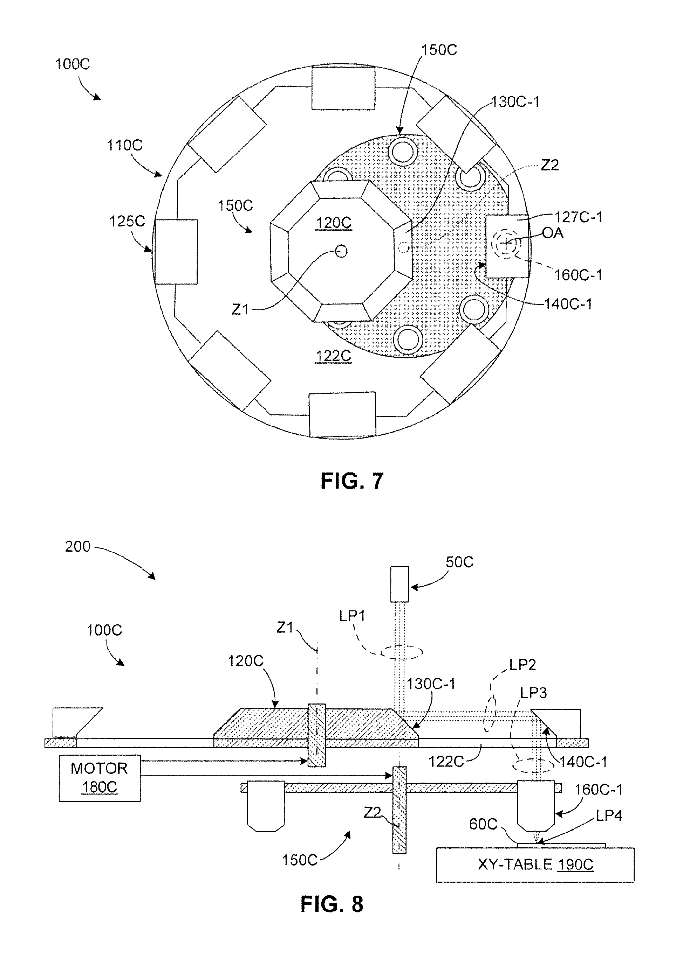

Fig. 7 is a top plan view showing scanning system 100C in an assembled state, where revolver unit 150C is disposed below conveyor unit 110C, and axes Z1 and Z2 are fixedly positioned such that each orbiting element (e.g., orbiting element 160C-1) is operably positioned to receive collimated light from a corresponding first mirror surface (e.g., first mirror surface 130C-1) and its associated second mirror surface (e.g., second mirror surface 140C-1) when revolver unit 150C and conveyor unit 110C are in corresponding rotated positions. In particular, conveyor unit 110C is disposed to rotate around axis Z1 and revolver unit 150C is disposed to rotate around axis Z2 such that, when said collimated light is transmitted in a direction collinear with axis Z2 (i.e., into the sheet of Fig. 7) onto first mirror surface 130C-1, the collimated light is reflected by first mirror surface 130C-1 to associated second mirror surface 140C-1, and then reflected by second mirror surface 140C-1 along a scanning light path portion LP3 in a direction collinear with through optical axis OA of orbiting microscope objective 160C-1.

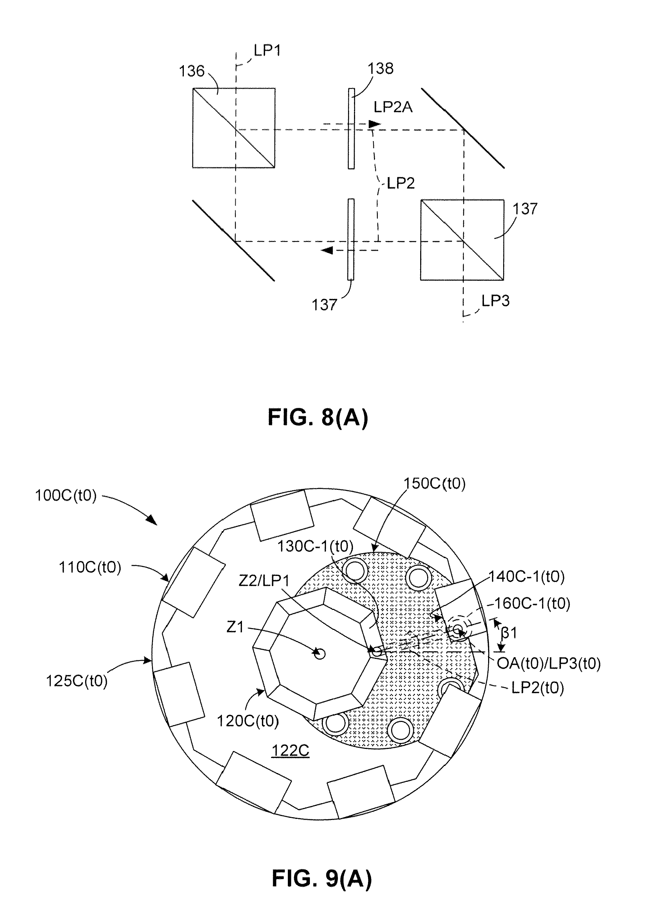

Fig. 8 shows a simplified large field, high resolution, high efficiency apparatus 200 (e.g., a rotary microscope or a laser ablation device) that combines multiplexed scanning system 100C (described above) with a source/receiver device 50C (e.g., a laser or image sensor) and a positioning device (e.g., an X-Y table) 190C that serves to position a sample 60C below scanning system 100C such that focused light transmitted on a focused light path portion LP4 is directed onto a surface of sample 60C. For example, at a selected point in time during operation, laser (collimated) light generated by device 50C is directed along fixed light path portion LP1 and reflected by first mirror surface 130C-1 along intermediate light path portion LP2 to second mirror surface 140C-1, which then reflects the light along scanning light path portion LP3 to microscope objective 160C-1, which focuses the received collimated light to form focused light path portion LP4 that is focused on the surface of sample 60C. Conversely (or coincidentally), a magnified image of the surface of sample 60C is captured by microscope objective 160C-1 at a selected point in time is directed along scanning light path portion LP3 to second mirror surface 140C-1, which reflects the light along intermediate light path portion LP2 to first mirror surface 130C-1, which then reflects the light to a receiver (e.g., device 50C or another device optically coupled to fixed light path portion LP1 by way of a beam splitter or other device). As set forth in the description below, by applying the focused light path portion LP4 on a desired sample while causing conveyor unit 110C and revolver unit 150C to rotate around axes Z1 and Z2 in the manner described above using a motor 180C, and by periodically shifting the position of sample 60C using X-Y table 190C, the surface of sample 50C can be systematically scanned for purposes of achieving large field, high resolution, high efficiency microscopy, or to perform surface ablation such as that described in co-owned and co-pending U.S. Patent Application Serial No. 11/336,714, entitled "SOLAR CELL PRODUCTION USING NON-CONTACT PATTERNING AND DIRECT-WRITE METALLIZATION", which is incorporated herein by reference in its entirety.

When used as a light multiplexer for either input or output scanning, intermediate light path LP2 can be split into multiple light paths. For example, as indicated by the simplified diagram in Fig. 8(A), beam splitters 136 and 137 can be placed into the light path to make multiple LP2 paths. With this arrangement, light can traverse from LP1 to LP3 via 2 routes, the top path LP2A or the bottom path LP2B. Alternately, beam splitters 136 and 137 could be frequency or polarization dependent and allow light to travel one direction in the top route and the other direction in the bottom route. It is clear that more than two pathways could be utilized. Finally, optional filters, polarizers, or other optical elements 138 and 139, which are unique to each light passage direction as indicated by the arrows, can be placed in top and bottom paths LP2A and LP2B to facilitate light processing.

For applications where different light qualities are required per aperture station each arm (LP2 or LP3) of the apparatus can be unique; for applications where there are common light qualities required, the light qualifier optics can be placed in the common path LP1.

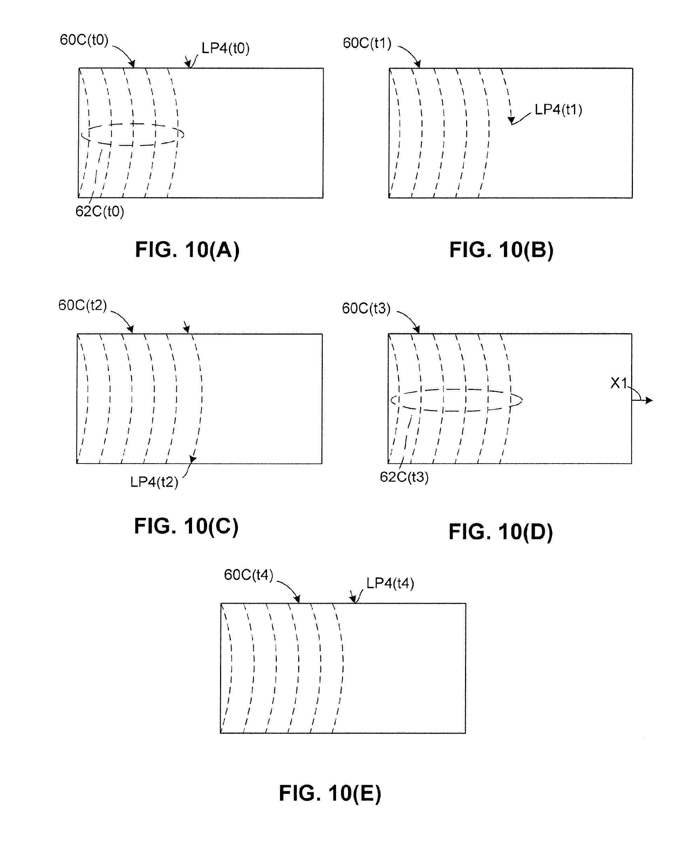

Figs. 9(A) to 9(E) and 10(A) to 10(E) illustrate operation of apparatus 200, where Figs. 9(A) to 9(E) are partial top plan views showing the operating position of scanning system 100C during six sequential time periods, and Figs. 10(A) to 10(E) are top plan views showing sample 60C during the same six time periods. The parenthetical suffixes "tx" (where "x" is a number) are used to indicate incremental time progressions as conveyor unit 110C rotates around first axis Z1 and revolver unit 150C rotates around second axis Z2.

Fig. 9(A) shows conveyor unit 110C(t0) and revolver unit 150C(t0) in an initial position at time t0. Collimated light directed along fixed light path portion LP1 is shown in top view as a circle that intersects a first region of first mirror surface 130C-1, and is depicted in intermediate light path portion LP2(t0) by the dashed line extending from first mirror surface 130C-1(t0) to second mirror surface 140C-1(t0), from which it is directed along scanning light path portion LP3(t0) through microscope objective 160C-1(t0). As indicated in top view in Fig. 9(A), conveyor unit 110c(t0) and revolver unit 150C(t0) are rotationally positioned such that intermediate light path portion LP2(t0) is reflected by first mirror surface 130C-1 at a first angle β1 in order to intersect microscope objective 160C-1(t0).

Fig. 10(A) shows the position of focused light path portion LP4 (t0) generated by microscope objective 160C-1 on sample 60C(t0) at the same point in time depicted in Fig. 9(A). Previous scan paths 62C are shown in dashed lines for reference.

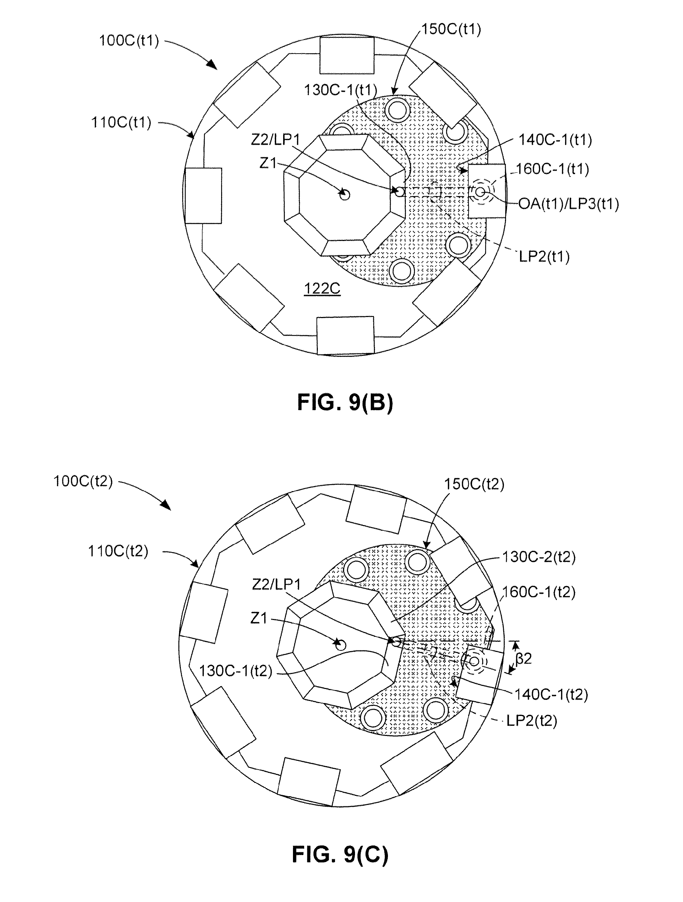

Fig. 9(B) shows conveyor unit 110C(t1) and revolver unit 150C(t1) at time t1, which is a brief period after time t0. At this point, conveyor unit 110C (t1) and revolver unit 150C(tl) are rotationally repositioned around axes Z1 and Z2 such that fixed light path portion LP1 is directed onto a central region of first mirror surface 130C-1(t1), and first mirror surface 130C-1(t1) and second mirror surface 140C-1 are now angled such that intermediate light path portion LP2(t1) is reflected at a second angle (i.e., substantially horizontal in the figure) in order to intersect microscope objective 160C-1(t1), which has rotated at the same rate such that scanning light path portion LP3(tl) remains collinear with optical axis OA(t1) of microscope objective 160C-1(t1). Note that the light passing along scanning light path portion LP3(t0) passes through a corresponding portion of opening 122C defined between multifaceted optical element 120C(t0) and ring structure 125C(t0).

Fig. 10(B) shows the position of focused light path portion LP4(t1) generated by microscope objective 160C-1 at the point in time depicted in Fig. 9(B). In particular, between times t0 and t1 focused light path portion LP4(t1) has scanned over the region indicated by the dashed line arrow, and is now disposed over a central portion of sample 60C(t1).

Fig. 9(C) shows conveyor unit HOC(t2) and revolver unit 150C(t2) at subsequent time t2. At this point, conveyor unit 110C(t2) and revolver unit 150C(t2) are rotationally repositioned around axes Z1 and Z2 such that fixed light path portion LP1 is directed onto an upper region of first mirror surface 130C-1(t2), and first mirror surface 130C-1(t2) and second mirror surface 140C-1(t2) are now angled such that intermediate light path portion LP2(t1) is reflected at a third angle β2 (i.e., downward in the figure) in order to intersect microscope objective 160C-1(t2), which has rotated at the same rate such that scanning light path portion LP3(t2) remains collinear with optical axis OA(t2).

Fig. 10(C) shows the position of focused light path portion LP4(t2) generated by microscope objective 160C-1 at the point in time depicted in Fig. 9(C). In particular, between times t0 and t2 focused light path portion LP4(t2) has scanned over the region indicated by the dashed line arrow, and is now scanned entirely across the surface of sample 60C(t2).

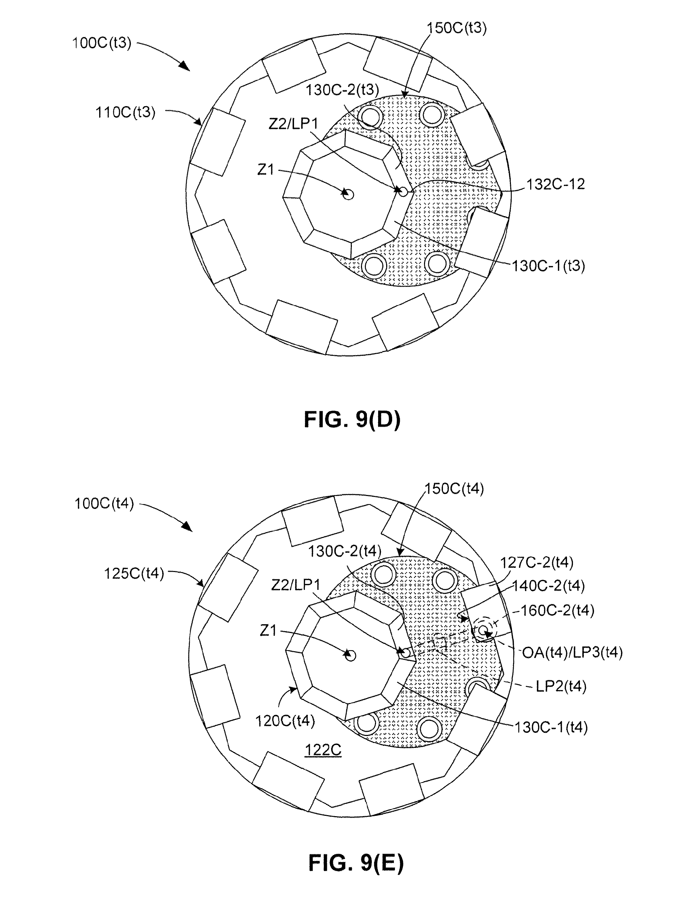

Figs. 9(D) and 10(D) illustrate a time t3 at which conveyor unit 110C(t3) and revolver unit 150C(t3) are rotationally positioned around axes Z1 and Z2 such that fixed light path portion LP1 is directed onto corner 132C-12 separating first mirror surfaces 130C-1 and 130C-2. At this transition point, light is not reliably reflected to any of the second mirror surfaces, however, partial light will be transmitted through two adjacent objectives or apertures and limits scanning efficiency. That is, during the transition period when the scanning light path portion "spot" is between first mirror surfaces 130C-1 and 130C-2 (i.e., directed onto corner 132C-12), only partial power is delivered/received from adjacent microscope objectives 160C-1 and 160C-2, thereby potentially creating two "partial power" (artifact) regions adjacent to the side edges of sample 60(t3) (e.g., at the end of the just-completed scan path generated through objective 160C-1 and at the beginning of the next scan path, described below, that is generated by objective 160C-2). As indicated in Fig. 10(D), this transition period may be utilized to, for example, shift sample 60C(t3) an incremental distance X1 to position sample 60C(t3) for a subsequent scanning pass.

Fig. 9(E) shows conveyor unit 110C(t4) and revolver unit 150C at subsequent times t4 and t5 after conveyor unit 110C(t4) revolves unit 150C(t4) are rotationally repositioned around axes Z1 and Z2 such that fixed light path portion Lip1 is directed onto a region of second mirror surface 130C-2(t4), and first mirror surface 130C-2(t4) and associated second mirror surface 140C-2(t4) are now angled such that intermediate light path portion LP2(t4) is reflected at an angle such that scanning light path portion LP3 (t4) intersects microscope objective 160C-2(t4), which has rotated into the required position such that scanning light path portion LP3 (t4) is now collinear with optical axis OA(t4) of microscope objective 160C-2 (t4) . Fig. 10(E) shows the position of focused light path portion LP4(t4) generated by microscope objective 160C-2 at the point in time depicted in Fig. 9(E), indicating the starting point of subsequent scan path.

By repeating the operation described with reference to Figs. 9(A) to 9(E) and 10(A) to 10(E), those skilled in the art will recognize how multiplexed scanning system 100C can be utilized to produce a large field, high resolution, high efficiency laser ablation apparatus.

Although the present invention has been described with respect to certain specific embodiments, it will be clear to those skilled in the art that the inventive features of the present invention are applicable to other embodiments as well, all of which are intended to fall within the scope of the present invention.

For example, although the multiplexing scanning microscope is described with reference to eight microscope objectives, any number of objectives may be utilized (e.g., two, ten, twenty-five, etc.).

In addition, from Figure 7 it is clear that there may be space available on the rotor unit for intermediate apertures or objectives placed between the positions already described. These positions can be populated with additional sets of objectives, apertures or other devices. By pre-adjusting the fixed relative phase angle of the conveyor unit with respect to the rotor unit, these alternate sets of devices can be accessed for scanning. For instance, a set of 40x objectives can be positioned as previously described, and an additional set of 10x objectives could be placed half way in between. A scan of one or more rotations could be performed at the first phase angle to obtain 40x images, then the phase angle can be adjusted to coincide with the 10x objectives, and an additional scan can be performed to obtain images from the 10x objectives.

Moreover, the scanning system can be utilized to make a large field movie microscope. This would include setting a camera in LP1 in drift scanning mode, or time-delay-imaging (TDI) (well known in the art) and staggering the arm lengths to sweep out adjacent portions of a large field image during one revolution. Then by rotating at 30 revolutions per second, a set of real-time images of a large field at high resolution can be produced suitable for animated viewing or storage.

Another possible modification to the invention could be to make a large field interlaced confocal microscope (limited to air-gap imaging; no oil emersion). This configuration would extend the resolution to about .3 um @ 60x, 0.95 NA. An image can be passed through pinholes to create a confocal microscope. By both staggering the arms and/or staggering the focus of a respective arm, a 3-D volume could be defined and imaged.

Furthermore, a 2-D array of .3 um pinholes can be defined and placed in the return portion of fixed light path LP1. The pinholes would be arranged .15 um apart in the slow direction to achieve Niquist criteria but staggered in the fast direction to maintain at least 10 hole diameters between any adjacent holes. An array of 1024 holes would cover 154 um of the sample in the slow scan direction. The resultant light could be imaged onto the face of a 1024x1280 video CCD in drift scanning or TDI mode for readout.

Another possible application for the rotary microscope is a Semiconductor and PC Board Inspection Microscope.

Another possible application for the invention is to provide a Kohler illumination system for a rotary microscope by mounting a secondary and synchronous undercarriage conveyor/rotator from below with Kohler illumination characteristics.

Another possible application for the invention is to provide a Differential Interference Contrast Microscopy (DICM) illumination system for a rotary microscope by mounting a secondary and synchronous undercarriage conveyor/rotator from below with DCIM illumination characteristics.

Another possible application for the invention is a Spatially Resolved Spectral Analysis Rotary Microscope. This application would use a grating in the fixed part of the light path to array light onto a multi-cathode pmt to acquire a spectrum for each point scanned.

Another possible adaptation of the rotary microscope is a Wide Field Scanning Profilimeter. This could be accomplished by staggering the z-axis focal heights of each objective around the circumference of the rotator unit. A single revolution would capture several focal depths, while multiple revolutions could capture more depths; image processing would acquire peak contrast versus depth over a wide field to obtain depth information vs position.

Another possible use for the rotary microscope is to make an extended depth of focus microscope by staggering the z-axis focal heights of each objective around the circumference of the rotator unit to image different slices of a specimen. A single revolution would capture several focal depths, while multiple revolutions could capture more depths; image processing would acquire peak contrast versus depth over a wide field to display an in-focus image regardless of the depth.

A possible modification to the invention involves placing a 45 degree mirror at the output of the revolver, redirecting the optical path radially outward from the axis of revolution. Such a system would resemble the characteristics of a galvo-scanner but have an efficiency and scan rate far in excess of current galvo scanners.

Another possible modification to the invention involves replacing the microscope objectives with optics compatible with projection optics and single or multicolored light sources compatible with color displays. Such a combination may provide optical efficiencies and multiplexing flexibility beyond that of conventional galvo-based designs.

Another possible modification to the invention involves replacing the microscope objectives with telescope optics. Such an input device could provide optical efficiencies and multiplexing flexibility beyond that of conventional galvo-based designs.

Another possible modification to the invention involves placing a beam splitter into the output pathway and redirecting a fraction of the light into a grating clock that can be used to clock data into or out of image buffers. This could help eliminate motor hunting, scan non-linearity, or scan line jitter that plagues many raster systems.

Another possible use of the invention involves placing light sources along the arc of the scan of the revolver unit directed into the input aperture of the rotating light path. The fixed portion of the light path will repeatedly access these sources in the order placed at a high rate of speed and throughput. If the light sources are modulated, that too will be transferred to the single optical path. The light sources can be the output of fiber optics or fiber bundles as well as lasers.

Another possible modification to the invention is to stop the rotation of the unit and use it as a stationary light path. This would allow, for instance, the use of a high quality microscope and a rotary microscope in the same form factor.

Another possible modification to the invention is to place two or more axis Z2 with associated rotary optics at alternate points around axis Z1. Two axes Z2 would allow, for instance, a stereo scanner or two sample inspection stations around the periphery of the conveyor unit.

Another possible application of the invention is to use it for a scanning cytometer to find rare cells. A laser emitting at 488 nm, for instance, can be inserted into the fixed path with a dichroic mirror to illuminate the sample through a microscope objective with an 8 micron spot in a raster pattern. Subsequent fluorescent light emitted from any rare cell target is simultaneously collected by the microscope objective and transferred back to a photomultiplier tube (PMT) through the dichroic splitter and an emission filter to detect a rare cell. Several PMT's can be used to capture multiple emission frequencies from multiple targets using standard fluorescence microscope techniques. This system would eliminate any auto fluorescence caused by fiber bundle capture techniques and be much faster than flow cytometers.

Moreover, a Multiple Laser Stimulation and Emission Fluorescence Rotary Microscope could be implemented by inserting several different laser frequencies at LP1 and selectively allowing/blocking the stimulation and return frequencies on the sample by placing unique stimulation and return filters on the individual arms.

## Claims

1. A scanning system for transmitting collimated light along a light path including a fixed light path portion and a scanning light path portion, wherein the scanning light path portion is parallel to the fixed light path portion and is spaced from the fixed light path portion by an offset distance, and wherein the scanning system comprises:
a conveyor unit including a first surface and a second surface disposed to rotate in a fixed parallel relationship around a first axis, the first axis being parallel to the fixed light path portion, the first surface and the second surface being spaced apart by a predetermined distance and inclined at an angle relative relative to the first axis such that when said collimated light is directed along said fixed light path portion onto said first surface, said collimated light is redirected by the first surface toward said second surface, and then redirected by said second surface along said scanning light path portion; and
a revolver unit including an orbiting element disposed to orbit around a second axis, the second axis being collinear with the fixed light path portion, and the orbiting element being disposed at said offset distance from the second axis.

2. The scanning system according to claim 1, wherein the revolver unit is arranged relative to said conveyor unit such that, when said collimated light is directed along said fixed light path portion onto said first surface, said redirected collimated light on said scanning light path portion intersects said orbiting element.

3. The scanning system according to claim 1 or claim 2, further comprising means for rotating the conveyor unit and the revolver unit at a common rotational speed such that, while said collimated light is directed along said fixed light path portion onto said first surface and said conveyor and revolver units are being rotated at said common speed, said collimated light redirected by said second surface along said scanning light path portion remains intersected with said orbiting element.

4. The scanning system according to any of the preceding claims,
wherein said orbiting objective comprises a microscope objective having an optical axis, and
wherein the revolver unit is arranged relative to said conveyor unit such that, when said collimated light is directed along said fixed light path portion onto said first surface, said redirected collimated light on said scanning light path portion is collinear with the optical axis of the microscope objective.

5. The scanning system according to any of the preceding claims, wherein said first and second surfaces comprise transparent surfaces such that when said collimated light is directed along said fixed light path portion onto said first surface, said collimated light is refracted by the first surface toward said second surface, and then refracted by said second surface along said scanning light path portion.

6. The scanning system according to any of the preceding claims, wherein said conveyor unit comprises at least one solid optical element defining said first and second surfaces and arranged such that an intermediate light path portion between said first and second surfaces at least partially passes through said at least one solid optical element.

7. The scanning system according to any of the preceding claims, wherein said first and second surfaces comprise reflective surfaces fixedly arranged such that when said collimated light is directed along said fixed light path portion onto said first surface, said collimated light is reflected by the first surface toward said second surface, and then reflected by said second surface along said scanning light path portion.

8. The scanning system according to any of claims 1 to 5, wherein said conveyor unit comprises:
a multifaceted optical element including a plurality of first reflecting surfaces,
a ring structure including a plurality of second reflecting surfaces surrounding said multifaceted optical element and positioned such that each of said first reflecting surfaces faces an associated second reflecting surface of the plurality of second reflecting surfaces, wherein said multifaceted optical element and said ring structure are disposed to rotate around the first axis in a fixed relationship, and
wherein the revolver unit comprises a plurality of orbiting elements disposed in a circular pattern around said second axis.

9. The scanning system according to claim 8, wherein the revolver unit is arranged relative to said conveyor unit such that each orbiting element of said plurality of orbiting elements is operably positioned to receive collimated light from a corresponding first reflecting surface and the associated second reflecting surface of said corresponding first reflecting surface, whereby when said collimated light is directed along said fixed light path portion onto said corresponding first reflecting surface, said collimated light is reflected by the first reflecting surface to said associated second reflecting surface, and then reflected by said second reflecting surface along said scanning light path portion through said each orbiting element.

10. The scanning system according to claim 9, further comprising means for rotating the conveyor unit and the revolver unit at a common rotational speed such that, while said collimated light is directed along said fixed light path portion onto said corresponding first reflecting surface and said conveyor and revolver units are being rotated at said common speed, said collimated light redirected by said associated second reflecting surface along said scanning light path portion remains intersected with said each orbiting element.

11. The scanning system according to claim 10, wherein each of said plurality of orbiting elements comprises a microscope objective disposed such that each said microscope objective generates a focused light path portion that traces a curved path while said collimated light directed along said scanning light path portion remains intersected with said each microscope objective.

12. A large field, high resolution, high efficiency rotary microscope for generating a magnified image of a sample, the rotary microscope comprising:
a multiplexed scanning system according to any of the preceding claims,
wherein the conveyor unit comprises:
a multifaceted optical element including a plurality of first reflecting surfaces disposed to rotate around a first axis, the first axis being parallel to and non-collinear with the fixed light path portion, and
a ring structure disposed to rotate around the first axis in a fixed relationship with said multifaceted optical element, said ring structure including a plurality of second reflecting surfaces surrounding said multifaceted optical element and positioned such that each of said first reflecting surfaces is parallel to and faces an associated second reflecting surface of the plurality of second reflecting surfaces, wherein said collimated light reflected by one of said first reflecting surfaces and its associated second reflecting surface between said fixed light path portion and said scanning light path portion; and
the revolver unit comprises a plurality of orbiting microscope objectives disposed in a circular pattern around a second axis, the second axis being collinear with the fixed light path portion, wherein the plurality of orbiting microscope objectives are disposed at said offset distance from the second axis; and
a positioning mechanism for moving the sample under the revolver unit.

13. A large field, high resolution, high efficiency laser ablation apparatus for ablating material from a surface of a sample, the laser ablation apparatus comprising:
a laser disposed to direct the collimated light along a fixed light path portion; and
a multiplexed scanning system according to any of claims 1 to 11 for transmitting collimated light along a light path wherein the conveyor unit comprises:
a multifaceted optical element including a plurality of first reflecting surfaces disposed to rotate around a first axis, the first axis being parallel to and non-collinear with the fixed light path portion, and
a ring structure disposed to rotate around the first axis in a fixed relationship with said multifaceted optical element, said ring structure including a plurality of second reflecting surfaces surrounding said multifaceted optical element and positioned such that each of said first reflecting surfaces is parallel to and faces an associated second reflecting surface of the plurality of second reflecting surfaces, wherein said collimated light directed along the fixed light path portion is reflected by one of said first reflecting surfaces to its associated second reflecting surface, and by said associated second reflecting surface along a scanning light path portion, wherein the scanning light path portion is parallel to the fixed light path portion and is spaced from the fixed light path portion by an offset distance; and
the revolver unit comprises a plurality of orbiting elements that are disposed in a circular pattern around a second axis, the second axis being collinear with the fixed light path portion, wherein the plurality of orbiting elements are disposed at said offset distance from the second axis; and
a positioning mechanism for moving the sample under the revolver unit.
